# EUROPEAN PATENT APPLICATION

(11) **EP 4 807 611 A1**
(43) Date of publication of application: **16.09.2026**
(21) Application number: 25163538.9
(22) Date of filing: 13.03.2025
(51) Int. Cl.: G06F 30/27, G06F 113/08, G06F 113/14

(54) **METHOD FOR CONFIGURING A LOW-FIDELITY SIMULATION MODEL FOR SIMULATING AN OPERATION OF AN INDUSTRIAL PLANT**

(71) Applicant: ABB SCHWEIZ AG, 5400 Baden (CH)
(72) Inventor: GRUENER, Sten, 69514 Laudenbach (DE); HOERNICKE, Mario, 76829 Landau (DE)
(74) Representative: Maiwald GmbH

(57) **Abstract**

The disclosure relates to a method for configuring a low-fidelity simulation model for simulating an operation of an industrial plant, wherein the low-fidelity simulation model is indicative of a topology of plant devices in the industrial plant, the method comprising:
- obtaining (S1) documentation data indicative of a documentation of one or more of the plant devices in the industrial plant,
- providing (S2) the documentation data for processing by an Al model, for extracting of one or more parameters for one or more device properties of the one or more plant devices in the documentation data,
- obtaining (S3) the extracted one or more parameters from the Al model, and
- configuring (S4) the low-fidelity simulation model by applying the extracted one or more parameters of the one or more device properties.

## Description

### TECHNICAL FIELD

The present invention relates to a method for configuring a low-fidelity simulation model for simulating an operation of an industrial plant, a computer program product, and a data processing system.

### BACKGROUND

A low-fidelity simulation model of an industrial plant is designed to simulate systems, processes, or operations at a fundamental or simplified level. Unlike high-fidelity simulation models that meticulously replicate real-world behavior, low-fidelity models offer less detailed representations, focusing on broader concepts and processes. They are typically employed in initial design phases, testing, or training to expedite exploration of ideas in a cost-effective manner.

The low-fidelity simulation model serves as a topological representation illustrating relationships among various plant devices (e.g., pumps, tanks, pipes, sensors, actuators). These models primarily depict connections between devices through material flows (e.g., pumps, flow meters) or energy flows (e.g., heaters, thermocouples, compressors, pressure connections). Typically presented in graph form, these models outline these interconnections or flows.

Given the preliminary developmental stage of the plant, simulations are intentionally rudimentary (hence termed low-fidelity); for instance, valve operations are simplified to binary "open-close" actions with simulated delays, diverging from actual equipment behaviors. Such parameters, including delay timings, play a crucial role in automation, such as defining appropriate signal delays for valve feedback before triggering an alarm.

A common issue encountered in many low-fidelity simulation models arises when employing third-party plant devices and manually parameterizing them. Users often need to manually input parameters for unknown plant devices utilized in the simulation model. For example, setting parameters like valve opening delays from third-party manufacturers necessitates manual input into the low-fidelity simulation tool. This process introduces challenges related to time, cost, complexity, and user dependency.

### SUMMARY

The above problem or need is at least partially solved or alleviated by the subject matters of the independent claims of the present disclosure, wherein further examples are incorporated in the dependent claims.

According to an aspect of the present disclosure, there is provided a method for configuring a low-fidelity simulation model for simulating an operation of an industrial plant, wherein the low-fidelity simulation model is indicative of a topology of plant devices in the industrial plant, the method comprising:
- obtaining documentation data indicative of a documentation of one or more of the plant devices in the industrial plant,
- providing the documentation data for processing by an Al model, for extracting of one or more parameters for one or more device properties of the one or more plant devices in the documentation data,
- obtaining the extracted one or more parameters from the Al model, and
- configuring the low-fidelity simulation model by applying the extracted one or more parameters of the one or more device properties.

The method is applicable to plants for any type of industrial production (continuous, batch or discrete). The plant may be also referred to as a process plant, since it typically carries out one or more processes, e.g., production processes. The term "plant" as used herein may refer to plants for continuous (process) production as well as to factories for discrete manufacturing. They are independent of an automation system hardware (e.g., the type of a distributed control system, DCS) or the specific domain because respective hardware or domain specific rules may be provided accordingly. Therefore, the embodiments can be used in all running plants, like for example in oil & gas, mining, minerals processing, pulp and paper, cement, food and beverage, power production or chemical production.

"A low-fidelity simulation model" may be setting up a simplified representation of a system that captures only the most essential features and behaviors while omitting fine details. These models may be used for quick analysis, conceptional understanding, or preliminary testing when high accuracy is not necessary. It may provide functional view of how plant devices interact with each other while performing an operation. Developed tools for low-fidelity simulation may allow "one-click" simulations based on a Piping and Instrumentation Diagrams, P&IDs. In an example the low-fidelity simulation may allow to pre-set levels in vessels and do basic operations like opening valves and letting liquid out of the tank.

The low-fidelity simulation model is indicative of a topology of plant devices in the industrial plant. The topology of the plant devices may refer to how plant devices are arranged and interconnected in the industrial plant. A low-fidelity simulation model may represent the topology of the plant devices in a simplified manner, focusing on basic structures and functional flow of the operation rather than detailed physical interactions or precise spatial layouts. In such a low-fidelity simulation model, the connectivity and logical relationships between plant devices may be maintained, allowing understanding the operation and related process flows, control strategies and operational dependencies. However, it may omit intricate details like exact pipe lengths, pressure drops, transient dynamics, or advanced dynamic behaviors of the plant devices.

The low-fidelity simulation model may be indicative of a graph model indicating relationships between different plant devices of the plant, in particular for a cluster of devices, e.g., control objects. The model may be of any ontology. The model may include edges and nodes. The nodes may be representing the plant devices and the edges or lines the relationships between them. The model may be visualized with its edges and nodes, e.g., on a display, partially, e.g., for a part of the plant, or fully, i.e., for the entire plant, in case the low-fidelity simulation model of the plant is complete in that regard. Depending on the particular plant, there may be many different plant devices used in the plant, e.g., pumps, tanks, pipes, sensors, actuators, etc., some of which may be control objects of the plant. Hence, all dependencies or relationships between plant devices may be visualized by a single (dependency) graph. The relationships between the plant devices may be represented by a product connection (e.g., material flow: such as between pump, flow meter, etc.), an energy connection (e.g., energy flow: such as between heater, thermo-coupling connection, compressor, pressure connections, etc.) and/or signal connections (e.g., information flow: as such between controller, data bus, wireless connection, etc.).

The "configuring a low-fidelity simulation model" may be referring to applying one or more parameters of the plant devices to the simulation model. It may involve specifying essential plant devices like pumps, valve, heat exchangers, separator, and reactors but without detailed physics-based interactions. It may comprise inputting simplified process conditions such as flow rates, temperatures, and pressure or implementing basic automation rules or control loops (e.g., PID controllers) without intricate tuning. In an example, the configuring may comprise replacing the parameters of the plant devices with pre-defined parameters to simulate material, energy, or data process while skipping complex fluid dynamics.

The "simulating an operation of an industrial plant" may refer to creating a virtual model that replicates the plant's processes, equipment behavior, and control systems to analyze performance, optimize operations, and test different scenarios. This simulation may be a low-fidelity models, which use simplified assumptions for quick analysis. In such simulation models all dependencies or relationships between plant devices may be visualized by a single graph. The goal of simulating an operation of an industrial plant may be showing how the industrial plan behaves while performing the operation. This process may help engineers and operators evaluate operation efficiency, troubleshoot potential issues, and improve decision-making without disrupting actual industrial plant operations.

The term "plant device" includes any component which can be active to contribute to the functioning or processing of the plant or its operations (including the control objects). The plant device may comprise valves, pumps, compressors, flow meters, separators, filters, and tanks.

The method may comprise obtaining documentation data indicative of a documentation of one or more of the plant devices in the industrial plant. The documentation of one or more of the plant devices may comprise structured information that describes specifications, operations, maintenance, and integration of one or more of the plant devices in the industrial plant. The documentation may further comprise information about installation, troubleshooting and compliance with industry standards. There may be different types of the documentation data comprising technical specifications, wiring and piping diagrams, operational manuals, and control and communication information. The documentation of one or more plant devices may comprise a text-based and printable documents, technical drawing and schematics, tabular and structured data, and/or web-based information.

The method may comprise providing the documentation data for processing by an Al model, for extracting of one or more parameters for one or more device properties of the one or more plant devices in the documentation data. The documentation data may be provided to the Al model. The Al model may process the documentation data by analyzing and interpreting information within the documentation data, extracting of one or more parameters of one or more properties of the one or more plant devices, and generating relevant outputs. In an example, the documentation data may be a text-based documentation and the Al model may analyze and interpret the text and structured information within the documentation data, extract of one or more parameters of one or more properties of the one or more plant devices and generating relevant outputs. In an example the Al model may be a generative Al model. In another example the Al model may comprise a large language model, LLM.

In the present disclosure, the term "Al model" is used to refer to artificial intelligence-based systems capable of processing data and performing tasks based on learned patterns. An Al model may include, for example, a generative Al model, which generates new content based on input data, as well as other Al models that perform similar or related functions, such as predictive Al, discriminative Al, reinforcement learning models or other models. It is expressly understood that the term Al model encompasses current and future advancements in the field, including any variations, improvements, or alternative architectures that achieve comparable results. By employing this terminology in the claims, the intention is to ensure that the scope of the invention remains applicable to evolving developments in Al technologies, preventing potential circumvention through future advancements.

Furthermore, in the present disclosure, the term "Large Language Model, LLM" is utilized to refer to a specific instance of a generative Al model capable of natural language processing. It is expressly understood that LLM is used herein as a placeholder to encompass potential advancements and variations in generative Al technologies that may emerge in the future.

The method may comprise obtaining the extracted one or more parameters from the Al model. The obtaining the extracted one or more parameters from the Al model may comprise obtaining the output of process of documentation data by the Al model. The output of data processing of Al model may comprise the extracted one or more parameters of one or more properties of one or more plant devices.

The method may comprise configuring the low-fidelity simulation model by applying the extracted one or more parameters of the one or more device properties. The configuring the low-fidelity simulation model may be performed by applying the extracted one or more parameters of the one or more device properties to parameters of the device properties. In other words, the one or more parameters may be set by the extracted one or more parameters of the one or more device properties.

The method may be in particular a computer-implemented method. This means that one, several, or all of the steps of the method may be carried out by a data processing system. A data processing system may be or comprise one or more data processing apparatuses or computers, which may be able to carry out the steps of the method. The data processing system or the one or more computers may generally comprise a processing unit, e.g., a CPU, and a computer program product in the form of a computer-readable storage medium, which may have stored thereon a computer program. The processing unit may be executing instructions stored on that computer program product to execute the steps of the method. The data processing system may further comprise one or more interfaces, e.g., wireless or wired, for data connection to one or more computers or systems of the plant.

The low-fidelity simulation model may be configured for simulating the operation of processing one or more fluids in the industrial plant by the plant devices.

The processing of one or more fluids in the industrial plant may comprise how fluids (liquids and/or gases) move, interact and change within the model. The low-fidelity simulation model may capture material flow between plant devices. Additionally, the low-fidelity simulation model may represent basic fluid properties such as flow status, and/or simple delay times. It may comprise on/off states, flow directions, approximate flow rate and delay times of the plant devices. A Flow control of the simulated operation may be binary (e.g., flowing or not flowing). The model may focus on essential system behaviors, such as whether fluid is flowing or not, providing a simplified yet useful representation of fluid movement within the industrial plant.

The low-fidelity simulation model may be configured to simulate the operation of processing the one or more fluids in the industrial plant independent from properties of the processed one or more fluids.

The properties of the processed one or more fluids may comprise detailed physics-based properties (e.g., detailed fluid dynamics, thermodynamics and/or reaction kinetics). In an example, the low-fidelity simulation model may be configured to simulate the operation of processing of the one or more fluids in the industrial plant independent from the detailed fluid dynamics such as viscosity, density, or compressibility. Instead, the model may focus on the functional aspects of the plant devices, including flow paths, on/off states, approximate flow rates, and delay times. This may allow for a simplified representation of the operation, making the simulation more efficient and easier to implement. By abstracting the properties of the processed one or more fluids, the model may enable a more generalized simulation that can be applied to different types of fluids without requiring modifications. This makes it useful for scenarios where the focus is on the overall process flow rather than detailed fluid dynamics. Such a low-fidelity approach reduces computational complexity while still providing valuable insights into the operational behavior of the industrial plant.

The configuring the low-fidelity simulation model may comprise replacing one or more existing parameters of the one or more device properties with the extracted one or more parameters.

The one or more existing parameters of the one or more device properties may be set or pre-defined parameters. The configuring the low-fidelity simulation model may be performed by applying the extracted one or more parameters to pre-defined parameters of the device properties. In other words, the one or more pre-defined parameters may be replaced by the extracted one or more parameters of the one or more device properties.

Obtaining the documentation data may comprise obtaining the documentation data based on a user input, wherein the provided documentation data comprises machine-readable data associated with the one or more of the plant devices.

Obtaining the documentation data may comprise uploading documentation data through the user input. In an example, a user may upload the documentation data of the plant device. The documentation data may be provided in a digital and/or a machine-readable format, enabling automated processing and integration into digital systems. This may comprise structured and tabular data formats such as CSV, XML, JSON, or SQL, standard word processing and PDF formats or engineering drawings and CAD formats.

The user input comprises an identification reference configured to provide access to the documentation data automatically, wherein the identification reference comprises a QR code and/or a weblink to the documentation data.

The identification reference, in particular in the user input e.g., in a form of a QR code and/or a weblink, may be used. The documentation data of the plant device may be invokable from the QR code and/or the weblink of the identification reference. By scanning the QR code or selecting the weblink, the system can directly access and process the associated documentation data, eliminating the need for manual searches and improving workflow efficiency. The identification reference may be embedded on the plant device, its packaging, or within a digital interface, enabling seamless retrieval of documentation data. Using the identification reference may trigger the system to access the corresponding documentation data. It ensures access up-to-date and device-specific documentation data without requiring manual data entry. Additionally, the identification reference may be linked to a centralized database, allowing real-time updates and version control of the documentation data, thereby enhancing accuracy and reducing the risk of outdated or incorrect documentation data being used.

Moreover, the method may further comprise storing the extracted one or more parameter for use in a subsequent simulation and to prevent redundant extraction of the same parameters of one or more of the plant devices.

The method may further comprise storing the extracted one or more parameters in a data repository for use in subsequent low-fidelity simulations. By storing the extracted one or more parameters, the parameters can be efficiently retrieved, avoiding the need to reprocess the documentation data and extract the one or more parameters of the same plant device multiple times.

The one or more extracted parameters are based on static data indicative of tables, dynamic data indicative of graphs or tables, or OPC UA communication data of the documentation data.

The static data may comprise dimensions, weight and/or certification class of the plant device, presented in a tabular form.

The dynamic data may comprise behavioral characteristics of the plant device, such as power/load curves and/or opening/closing delays. Furthermore, the dynamic data may be indicative of real-time operational behavior, including changes in system performance, variations in maintenance-related conditions, and fluctuations in downtime status. The dynamic data may also include real-time sensor readings and system responses that capture variations in the plant device's behavior over time. The dynamic data may be represented as plotted graphs (e.g., featuring linear or logarithmic curves) or tables depicting points along these curves.

The communication data may comprise connectivity information and communication parameters. In an example the communication data allows for the simulation of Modbus registers or respective OPC UA variables of a valve based on descriptions found in documents, such as register tables.

The one or more extracted parameters are based on shape and color of the plant device, wherein the shape and the color of the plant device indicative of manufacturer of the plant device.

The one or more extracted parameters may be determined based on the shape and color of the plant device. The shape of the plant device may provide structural or functional information, while the color may serve as an indicator of the manufacturer. This color-based identification can facilitate compatibility checks, device recognition, or integration within a larger system.

The low-fidelity simulation of the model is performed based on the applied extracted one or more parameters of the one or more device properties of the one or more plant devices.

After applying the extracted one or more parameters of one or more device properties to the model, the low-fidelity simulation will be performed. These parameters are applied to the model to describe the function of the plant device accurately. The model is then subjected to a low-fidelity simulation, where simplified computational methods are used to approximate model's behavior. This simulation evaluates how the applied parameters influence the model's response, allowing for an initial assessment of performance trends before proceeding to more detailed analyses.

The output of the low-fidelity simulation model comprises a piping and instrumentation diagram, P&ID, of the simulated model, wherein the P&ID of the simulated model represents configuration of piping, instrumentations and control components including the plant devices of the model in the industrial plant.

The output of the low-fidelity simulation model includes the P&ID that visually represents the simulated model. This P&ID provides a schematic layout of the model's configuration, detailing the interconnections between piping, plant devices, instrumentation, and control components. The P&ID serves as a structural representation of the model's operational framework, outlining the relationships between key process elements such as valves, pumps, sensors, actuators, and controllers. By generating this P&ID from the simulation, the model offers a comprehensive overview of the system's design, ensuring consistency between the simulated and real-world plant configurations.

The P&ID of the simulated model encapsulates the integration of plant devices and their functional relationships within industrial setup. It reflects the positioning and connectivity of pipelines, flow directions, measurement points, and control loops necessary for process operation. This output enables users to analyze the system architecture, verify design specifications, and identify potential optimization opportunities before implementing high-fidelity simulations or real-world modifications. By visualizing the model's structural and operational elements, the P&ID provides a foundational reference for further analysis, control system development, and decision-making in industrial process management.

The plant device comprises valves, pumps, compressors, flow meters, separators, filters, and tanks that are configured to perform an operation of the industrial plant.

According to a second aspect of this disclosure, there is provided a computer program product comprising instructions which, when executed by a data processing system, causes the data processing system to carry out the method of the first aspect.

The computer program product may be a computer program or computer programs as such, meaning a computer program consisting of or comprising program code to be executed by the data processing apparatus, in particular computer. Alternatively, the computer program product may be a product such as a data storage, in particular computer-readable data storage medium, on which the computer program may be temporarily or permanently stored.

According to a third aspect of this disclosure, there is provided a data processing system configured to carry out the method according to the first aspect of this disclosure.

For example, the data processing system may comprise the computer program product or at least be connected to it such that it may execute the instructions of the computer program.

It is noted that the above aspects, examples and features may be combined with each other irrespective of the aspect involved.

The above and other aspects of the present disclosure will become apparent from and elucidated with reference to the examples described hereinafter.

### BRIEF DESCRIPTION OF THE DRAWINGS

Exemplary embodiments will be further described with reference to Figures, wherein:
Figure 1 shows a flow chart of a method for configuring a low-fidelity simulation model for simulating an operation of an industrial plant;
Figure 2 shows a schematic representation of a method for configuring a low-fidelity simulation model for simulating an operation of an industrial plant in a low-fidelity simulation model tool;
Figure 3 shows a schematic representation of an example of low-fidelity simulation model in an industrial plant.

The Figures are schematic only and not true to scale. In principle, identical or like parts, elements and/or steps are provided with identical or like reference numerals in the Figures.

### DETAILED DESCRIPTION OF THE INVENTION

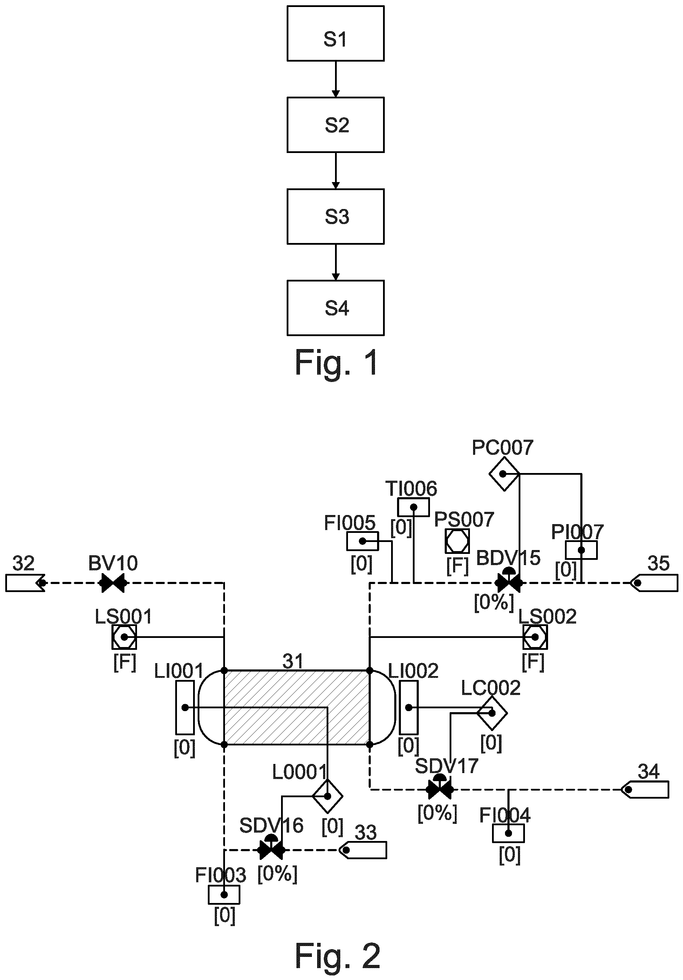

Figure 1 illustrates a flowchart of a method for configuring a low-fidelity simulation model to simulate the operation of an industrial plant. The method consists of the following five steps: In a first step S1 of the method, the documentation data is obtained, where it contains information about one or more plant devices within the industrial plant. The obtaining documentation data is indicative of a documentation of one or more of the plant devices in the industrial plant. The documentation of one or more of the plant devices comprises structured information that describes specifications, operations, maintenance, and integration of one or more of the plant devices in the industrial plant. The documentation further comprises information about installation, troubleshooting and compliance with industry standards. There may be different types of the documentation data comprising technical specifications, wiring and piping diagrams, operational manuals, and control and communication information. The documentation of one or more plant devices may comprise a text-based and printable documents, technical drawing and schematics, tabular and structured data, and/or web-based information.

In a second step S2 of the method, the documentation data is provided for processing by a generative Al model to extract one or more parameters related to the properties of the plant devices. The documentation data may be provided to the generative Al model for processing. The generative Al model may process the documentation data by analyzing and interpreting information within the documentation data, extracting of one or more parameters of one or more properties of the one or more plant devices, and generating relevant outputs. In an example, the documentation data may be a text-based documentation, and the generative Al model may analyze and interpret the text and structured information within the documentation data, extract of one or more parameters of one or more properties of the one or more plant devices and generating relevant outputs.

In a third step S3 of the method, the extracted parameters are obtained from the generative Al model. The obtaining the extracted one or more parameters from the generative Al model may comprise obtaining the output of process of documentation data by the generative Al model. The output of data processing of generative Al model may comprise the extracted one or more parameters of one or more properties of one or more plant devices.

In a fourth step S4 of the method, the low-fidelity simulation model is configured by applying the extracted parameters to the corresponding device properties. The configuring the low-fidelity simulation model may be performed by applying the extracted one or more parameters of the one or more device properties to parameters of the device properties. In other words, the one or more parameters may be set by the extracted one or more parameters of the one or more device properties.

The method in Fig. 1 may comprise an additional step. In a fifth step of the method, the extracted one or more parameters of the one or more device properties of the one or more plant devices are stored in a device library, 15 wherein the device library 15 comprises parameters for one or more device properties of the one or more plant devices.

Figure 2 shows a schematic representation of an example of low-fidelity simulation model in an industrial plant. In this example, the low-fidelity simulation model comprises a separator 31, a plurality of flow indicators, and a plurality of valves. When the valve SDV16 is opened, the level in the separator vessel 31 decreases, and a flow indicator FI003 registers a corresponding flow rate. To achieve this, certain assumptions are necessary, such as the valve's nominal diameter. Improving the simulation's accuracy could be achieved by incorporating additional properties of the valve SDV16, such as its opening curve or the time taken to transition between fully closed and fully open positions. However, obtaining this data can be challenging due to the diverse range of valve vendors and the varying formats of their datasheets.

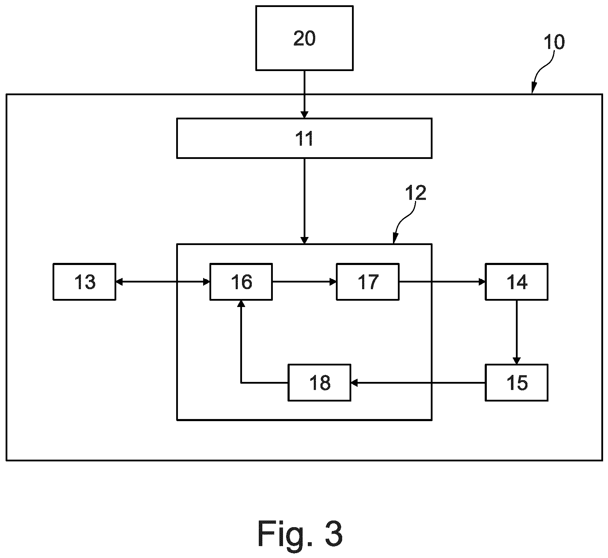

Figure 3 shows a schematic representation of a method for configuring a low-fidelity simulation model for simulating an operation of an industrial plant in a low-fidelity simulation model tool. In this method a user 20 provide the documentation data via input interface 11 to the low-fidelity simulation system 10. The low-fidelity simulation system 10 comprises an extractor unit 12, a generative Al model 13, a simulation engine 14 and a device library 15. The extractor unit 12 comprises a Retrieval-Augmented Generation, RAG 16, a Validation unit 17 and a Prompt unit 18. The RAG 16 is an Al framework that combines the retrieved information with capabilities of generative Al model, resulting accurate, up-to-date grounded extraction of the parameters from the documentation data. In an example, the device library 15 is a parameterizable library of mocked devices and may provide a block represented as a JSON structure for each mocked device.

In the example of Fig. 2 a time duration between opening and closing (opening delay) of the valve SDV16 is needed to be extracted and be configured to the existing parameter of valve. The device library 15 provides a block representing the behavior of the valve including some parameters, e.g., the time duration between opening and closing. A block represented as a JSON structure can be represented as following:

```
{
 "name": "open_close_valve",
 "description": "Simulation model for a simple open/close valve",
 "open_duration": "float [seconds]",
 "close_duration": "float [seconds]",
```

Where "open_duration" and "close_duration" are static parameters defining the behavior of the valve mock used in the low-fidelity simulation. Once the user 20 utilizes this valve function block in the simulation, these parameters must be specified manually.

In this example, the two valve parameters-"open_duration" and "close_duration"-must be obtained and parameterized.

The user 20, who may be a process or simulation engineer, needs to parameterize the following function block representing the valve's parameters including open_duration and close_duration.

Providing the documentation data comprises obtaining the documentation data based on a user input, wherein the provided documentation data comprises machine-readable data associated with the one or more of the plant devices. Providing the documentation data comprises uploading documentation data through the user input. In an example, the user 20 uploads the documentation data of the plant device. The documentation data may be provided in a machine-readable format, enabling automated processing and integration into digital systems. This may comprise structured and tabular data formats such as CSV, XML, JSON, or SQL, standard word processing and PDF formats or engineering drawings and CAD formats.

Based on the method shown in Fig. 3, the specification of the plant device parameters is automated, eliminating the need for the user to manually provide them.

According to this method in a first step the user 20 provides the documentation data (e.g., uploading a 3rd party datasheet) of the valve which can be obtained from a valve vendor. In the next step, the documentation data is passed to the RAG 16 to extract parameters of the valve from the documentation data. At the same time, a set of prompts is provided for the RAG 16 by the Prompt unit 18.

The provided prompts comprise templates of the device library for the extracted parameters. These prompts are constructed by mixing-in a particular template from the simulation engine.

The data type and units of the parameters represented by placeholders of format <datatype> [<unit>] will be extracted from the provided documentation data by the extractor unit 12.

Furthermore, the output value of the parameter represented by value placeholders 'float [seconds]' will be extracted from the provided documentation data by the extractor unit 12 and replaced with actual values, excluding units.

In another example, the user input comprises an identification reference configured to provide access to the documentation data automatically, wherein the identification reference comprises a QR code and/or a weblink to the documentation data.

The identification reference, in particular in the user input e.g., in a form of a QR code and/or a weblink, may be used. The documentation data of the plant device may be invokable from the QR code and/or the weblink of the identification reference. By scanning the QR code or selecting the weblink, the system can directly access and process the associated documentation data, eliminating the need for manual searches and improving workflow efficiency. The identification reference may be embedded on the plant device, its packaging, or within a digital interface, enabling seamless retrieval of documentation data. Using the identification reference may trigger the system to access the corresponding documentation data. It ensures access up-to-date and device-specific documentation data without requiring manual data entry. Additionally, the identification reference may be linked to a centralized database, allowing real-time updates and version control of the documentation data, thereby enhancing accuracy and reducing the risk of outdated or incorrect documentation data being used.

In this scenario, the user will not directly import the documentation data but will instead provide mechanisms to access the device's digital product passport, such as a QR code with an Identification Link. This link provides access to an Asset Administration Shell of the device, which inherently contains the documentation data comprising device information and related structured data.

In another example, the documentation data may be provided to the extractor unit 12 without user intervention.

In the next steps, the RAG 16 takes over and utilizes an embedding database to locate relevant information (e.g., multiple pages) within the documentation data that best matches the provided prompt. This process is performed using the generative Al model 13, typically leveraging embedding vectors and a vector database, where the generative Al model 13 is LLM-based generative Al model.

The extracted parameters from the documentation data, along with the provided prompts, is then passed to the generative Al model 13, which generates and provides an answer (output) to the prompt.

If, in the example of Fig. 3, the documentation data specifies an opening duration of 4 seconds and a closing duration of 3 seconds, the output of generative Al model 13, based on the extracted data from the documentation data, could be:

```
{
 "library_element": "open_close_valve",
 "open_duration": "3.0",
 "close_duration": "4.0",
 
```

In the next step, the generated output will be validated by the Validation unit 17. Initially, in this step a set of internal rules will be applied to automatically perform sanity checks, such as:
- ensuring the generated format is JSON, as expected.
- verifying that the generated output contains the required parameters of the one or more properties.
- checking that property values comply with the specified value domain (e.g., floats).

If any of these rules fail, the prompt will be extended, and the RAG 16 procedure will be restarted multiple times until the validation criteria are met.

At the end, after a successful validation of the extracted parameters from documentation data, the user 20 may verify the sanity of the extracted parameters and acknowledge the values.

With the parameterized values, a valve block is created and can be associated with a symbolic name for future reuse (e.g., VendorA ValveType1). This block may then be stored in the device library, allowing the accumulation of standardized valve types over time, thereby facilitating an extensive and reusable device library.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art and practicing the claimed invention, from a study of the drawings, the disclosure, and the claims.

As used herein, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Further, as used herein, the phrase "at least one" or similar, e.g., "one or more of", in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that such entities may optionally be present other than the entities specifically identified within the list of entities to which the phrase "at least one" or similar refers, whether related or unrelated to those entities specifically identified. Thus, as a non-limiting example, "at least one of A and B" (or, equivalently, "at least one of A or B" or, equivalently "at least one of A and/or B" or, equivalently "one or more of A and B", "one or more of A or B", or "one or more of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

As used herein, the phrase "being indicative of" may for example mean "reflecting" and/or "comprising". Accordingly, an entity, element and/or step referred to herein as "being indicative of [...]" can be synonymously or interchangeably used herein with one, two or all of said entity, element and/or step "comprising [...]" and said entity, element and/or step "reflecting [...]". Further, as used herein, phrases such as "based on", "related" or "relating", "associated" and similar are not to be seen exclusively in terms of the entities, elements and/or steps to which they are referring, unless otherwise stated. Instead, these phrases are to be understood inclusively, unless otherwise stated, in that, for example, an entity, element or step referring by any of these phrases or similar, e.g., being "based on", an or another entity, element or step, does not exclude that the respective entity, element or step may be further or also "based on" any other entity, element or step than the one to which it refers.

The designation of methods, steps and other features such as configuring a low-fidelity simulation model for simulating an operation of an industrial plant as provided herein is merely intended to make the methods and their steps referenceable and distinguishable from one another. By no means does the designation of methods and steps constitute a limitation of the scope of this disclosure. For example, when this disclosure describes a third step of a method, a first or second step of the method do not need to be present yet alone be performed before the third step unless they are explicitly referred to as being required per se or before the third step. Moreover, the presentation of methods or steps in a certain order is merely intended to facilitate one example of this disclosure and by no means constitutes a limitation of the scope of this disclosure. Generally, unless no explicitly required order is being mentioned, the methods and steps may be carried out in any feasible order. Specifically, the terms first, second, third or (a), (b), (c) and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Any reference signs in the claims should not be construed as limiting the scope.

### LIST OF REFERENCE SIGNS

- 10: System
- 11: Input interface
- 12: Extractor unit
- 13: Generative Al model
- 14: Simulation engine
- 15: Device library
- 16: RAG
- 17: Validation unit
- 18: Prompt unit
- 20: User
- 31: Separator
- 32: Inlet
- 33: Water
- 34: Crude
- 35: Gas
- S1: Step 1
- S2: Step 2
- S3: Step 3
- S4: Step 4

## Claims

1. A computer-implemented method for configuring a low-fidelity simulation model for simulating an operation of an industrial plant, wherein the low-fidelity simulation model is indicative of a topology of plant devices in the industrial plant, the method comprising:
- obtaining (S1) documentation data indicative of a documentation of one or more of the plant devices in the industrial plant;
- providing (S2) the documentation data for processing by an Al model, for extracting of one or more parameters for one or more device properties of the one or more plant devices in the documentation data;
- obtaining (S3) the extracted one or more parameters from the Al model; and
- configuring (S4) the low-fidelity simulation model by applying the extracted one or more parameters to the one or more device properties.

2. The method of claim 1, wherein the low-fidelity simulation model is configured for simulating the operation of processing one or more fluids in the industrial plant by the plant devices.

3. The method of claim 2, wherein the low-fidelity simulation model is configured to simulate the operation of processing the one or more fluids in the industrial plant independent from properties of the processed one or more fluids.

4. The method of any one of the previous claims, wherein configuring the low-fidelity simulation model comprises:
- replacing one or more existing parameters of the one or more device properties with the extracted one or more parameters.

5. The method of any one of the previous claims, wherein obtaining (S1) the documentation data comprises obtaining documentation data based on a user input, wherein the provided documentation data comprises digital and/or machine-readable data associated with the one or more of the plant devices.

6. The method of claim 5, wherein the user input comprises an identification reference configured to provide access to the documentation data automatically, wherein the identification reference comprises a QR code and/or a weblink to the documentation data.

7. The method of any one of the previous claims, wherein the method comprises:
- storing the extracted one or more parameter for use in a subsequent simulation and to prevent redundant extraction of the same parameters of one or more of the plant devices.

8. The method of any one of the previous claims, wherein the one or more extracted parameters are based on static data indicative of tables, dynamic data indicative of graphs or tables, or OPC UA communication data of the documentation data.

9. The method of any one of the previous claims, wherein the one or more extracted parameters are based on shape and color of the plant device, wherein the shape and the color of the plant device indicative of manufacturer of the plant device.

10. The method of any one of the previous claims, wherein the low-fidelity simulation of the model is performed based on the applied extracted one or more parameters of the one or more device properties of the one or more plant devices.

11. The method of claim 10, wherein output of the low-fidelity simulation model comprises a piping and instrumentation diagram, P&ID, of the simulated model, wherein the P&ID of the simulated model represents configuration of piping, instrumentations and control components including the plant devices of the model in the industrial plant.

12. The method of any one of the previous claims, wherein the plant device comprises valves, pumps, compressors, flow meters, separators, filters, and tanks that are configured to perform an operation of the industrial plant.

13. One or more computer program products comprising instructions which, when executed by a data processing system, causes the data processing system to carry out the method of any one of the previous claims.

14. A data processing system configured to carry out the method of any one of claims 1 to 12.
